# FASCICULE DE BREVET EUROPEEN

(11) **EP 2 798 323 B1**
(45) Date de publication et mention de la délivrance du brevet: **04.05.2022**
(21) Numéro de dépôt: 12816764.0
(22) Date de dépôt: 21.12.2012
(51) Int. Cl.: G01L 9/00, G02B 26/08, B81B 3/00

(54) **SYSTEME A ETALONNAGE COMMUN ET PROCEDE CORRESPONDANT**
GEMEINSAMES KALIBRIERUNGSSYSTEM UND ENTSPRECHENDES VERFAHREN
COMMON CALIBRATION SYSTEM AND CORRESPONDING METHOD

(30) Priorité: 29.12.2011 FR 1162542
(43) Date de publication de la demande: 05.11.2014
(73) Titulaire: ALPAO, 38330 Montbonnot-Saint-Martin (FR)
(72) Inventeur: BARRAULT, Michel, Raymond, 38710 Mens (FR)
(74) Mandataire: Weber, Jean-François
(86) Numéro de dépôt international: PCT/FR2012/053042
(87) Numéro de publication internationale: WO 2013/098514

(56) Documents cités:
- WO-A1-2011/015302
- FR-A1- 2 958 415
- US-A1- 2006 187 517
- US-A1- 2007 019 159

## Description

### DOMAINE TECHNIQUE

La présente invention se rapporte au domaine général des systèmes à surface mobile et/ou déformable, comme les miroirs déformables utilisés dans les systèmes optiques adaptatifs, pour des applications aussi diverses que l'astronomie, la médecine, notamment l'ophtalmologie, les télécommunications, la métrologie, etc.

La présente invention se rapporte plus particulièrement à un système comportant une surface mobile et/ou déformable ainsi qu'au moins un premier et un second capteur conçus pour fournir respectivement un premier et un second signal de mesure relatifs à la forme et/ou à la position de ladite surface mobile et/ou déformable (2) et destinés à être recueillis par un circuit de traitement conçu pour déterminer la forme et/ou la position de ladite surface mobile et/ou déformable, ledit système comprenant à cet effet au moins une première voie de mesure permettant de recueillir le premier signal de mesure et une seconde voie de mesure permettant de recueillir le second signal de mesure.

La présente invention se rapporte également à un procédé d'étalonnage du circuit de traitement d'un système à surface mobile et/ou déformable,

### TECHNIQUE ANTERIEURE

Il est connu d'employer des miroirs déformables afin de corriger les irrégularités du front d'onde d'un faisceau lumineux.

A cet effet, de tels miroirs déformables sont pourvus d'une surface réfléchissante déformable, généralement formée par une membrane flexible au dos de laquelle sont reliés des actionneurs capables de manœuvrer localement la membrane.

Il est ainsi possible de compenser des déphasages à l'origine de la déformation du front d'onde en modifiant le chemin optique parcouru par les différents rayons constituant le faisceau qui se réfléchit sur ladite membrane.

Eu égard à la précision requise pour l'asservissement en position de la membrane, et donc des actionneurs, il est indispensable d'étalonner de tels miroirs, ce qui suppose d'étalonner les actionneurs et la forme du miroir, et donc de réaliser aussi une mesure au caractère dynamique.

A cet effet, il est possible de procéder à un étalonnage du miroir par des mesures optiques, en éclairant la surface réfléchissante du miroir et en analysant le faisceau réfléchi, par exemple au moyen d'un interféromètre ou d'un capteur de front d'onde tel qu'un capteur de Shack-Hartmann.

Toutefois, une telle méthode implique la mise en oeuvre d'un appareillage externe particulièrement encombrant et coûteux, lequel doit lui-même être étalonné de sorte à ne pas fausser les mesures destinées à l'étalonnage du miroir. Une telle méthode est également source d'erreurs externes, dans la mesure où la taille du miroir doit être adaptée à la taille du capteur de front d'onde. On est ainsi obligé de rajouter des dispositifs d'adaptation de la taille du faisceau optique, dispositifs dont la forme n'est pas parfaitement connue.

Par ailleurs, quelle que soit la méthode d'étalonnage connue employée, celle-ci nécessite d'interrompre le service du miroir, voire de démonter ce dernier pour le tester sur un banc de mesure approprié. Un étalonnage est aussi nécessaire lorsque les conditions externes changent (température, éventuellement pression).

Bien entendu, une telle opération de maintenance en vue de l'étalonnage du miroir engendre un coût de fonctionnement non négligeable tout en privant l'utilisateur dudit miroir pendant la durée correspondante.

Le document WO-2011/015302 divulgue par ailleurs un dispositif et une méthode pour la mesure de pression capacitive.

Le document FR2958415 A1 divulgue un système avec une membrane réfléchissante mobile.

### EXPOSE DE L'INVENTION

Les objets assignés à l'invention visent par conséquent à remédier aux différents inconvénients susmentionnés et à proposer un nouveau système à surface mobile et/ou déformable, en particulier un miroir dèformable, dont l'étalonnage soit simplifié, rapide, et ne nécessite pas d'interrompre durablement le service dudit système.

Un autre objet assigné à l'invention vise à proposer un nouveau système à surface mobile ou déformable, en particulier un miroir déformable, qui présente une structure, et notamment des moyens d'étalonnage, particulièrement simples, robustes, et compacts.

Un autre objet assigné à l'invention vise à proposer un nouveau système a surface mobile ou déformable, en particulier un miroir déformable, dont l'étalonnage et le fonctionnement soient particulièrement précis, fiables et reproductibles.

Un autre objet assigné à l'invention vise à proposer un nouveau système à surface mobile et/ou déformable, en particulier un miroir déformable dont l'étalonnage puisse être réalisé automatiquement et fréquemment sans perturber significativement le fonctionnement dudit système.

Un autre objet assigné à l'invention vise à proposer un nouveau procédé d'étalonnage du circuit d'asservissement d'un système à surface mobile et/ou déformable, tel qu'un miroir déformable, qui permette de réaliser un étalonnage simple, rapide et peu coûteux dudit système.

Un autre objet assigné à l'invention vise à proposer un nouveau procédé d'étalonnage qui ne perturbe pas, voire qui n'interrompe pas le service d'un système à surface mobile et/ou déformable, tel qu'un miroir déformable,

Un autre objet assigné à l'invention vise à proposer un nouveau procédé d'étalonnage qui soit polyvalent et qui puisse être adapté à différentes configurations d'étalonnage et de fonctionnement d'un système à surface mobile et/ou déformable, tel qu'un miroir déformable,

Enfin, les objets assignés à l'invention visent à proposer un nouveau procédé d'étalonnage d'un système à surface mobile et/ou déformable, tel qu'un miroir déformable, qui soit particulièrement précis, fiable, et reproductible.

Les objets assignés à l'invention sont atteints à l'aide d'un système selon la revendication 1.

Les objets assignés à l'invention sont également atteints à l'aide d'un procédé d'étalonnage selon la revendication 9.

### DESCRIPTIF SOMMAIRE DES DESSINS

D'autres objets, caractéristiques et avantages de l'invention apparaîtront plus en détail à la lecture de la description qui suit, ainsi qu'à l'aide des figures annexées, fournies à titre purement illustratif et non limitatif, parmi lesquelles :
- La figure 1 représente, selon une vue écorchée en perspective, une variante de réalisation d'un miroir déformable conforme à l'invention.
- La figure 2 illustre, selon une vue schématique en coupe, une variante de réalisation d'un miroir déformable conforme à l'invention.
- La figure 3 illustre, selon une vue schématique de dessus, une variante d'agencement de capteurs et d'organe d'étalonnage commun au sein d'un miroir conforme à l'invention, tel que celui représenté sur la figure 2.
- La figure 4 illustre, selon une vue schématique de dessus, une autre variante d'agencement de capteurs et d'organe d'étalonnage conforme à l'invention.
- La figure 5 illustre, selon une vue schématique en coupe partielle, une variante d'implantation de capteurs et d'organe d'étalonnage correspondant à celle de la figure 4.
- La figure 6 illustre, selon un schéma-bloc synthétique, le fonctionnement d'un miroir déformable régi par un système d'asservissement appliquant le procédé d'étalonnage conforme à l'invention.
- La figure 7 illustre, selon une vue schématique partielle en coupe de dessus, une variante d'agencement de capteurs et d'organe d'étalonnage au sein d'un miroir déformable conforme à l'invention.
- La figure 8 illustre, selon une vue schématique de dessous, une variante d'agencement d'un miroir déformable pouvant s'appliquer notamment aux variantes de réalisation représentées sur les figures 1, 2 et 7.

### MEILLEURE MANIERE DE REALISER L'INVENTION

La présente invention se rapporte à un système 1 comportant une surface mobile et/ou déformable 2. Par « mobile » on désigne ici le fait que ladite surface 2 est susceptible de se déplacer au moins localement, et éventuellement globalement (déplacement solide), Par « déformable », on désigne ici le fait que ladite surface 2 est susceptible de subir un changement dimensionnel ou un changement de forme sous l'effet de l'application d'une force. Bien entendu, la surface 2 peut simultanément se déplacer globalement et se déformer, auquel cas son déplacement se décompose localement en une composante de déplacement solide et une composante de déplacement par déformation. En définitive, la surface 2 est donc une surface mouvante.

Le système 1 constitue un miroir déformable, ladite surface mobile et/ou déformable 2 formant dans ce cas un organe réflecteur.

Les références 1 et 2 désigneront donc respectivement dans ce qui suit le miroir déformable et l'organe réflecteur. Le miroir déformable 1 est destiné à modifier, et en particulier à rectifier, un front d'onde dans une application d'optique adaptative quelconque, par exemple dans le domaine de l'astronomie, de la médecine, et notamment de l'ophtalmologie, des télécommunications, de la métrologie, de l'analyse spectrale, de la génération et du couplage de faisceaux lasers, etc.

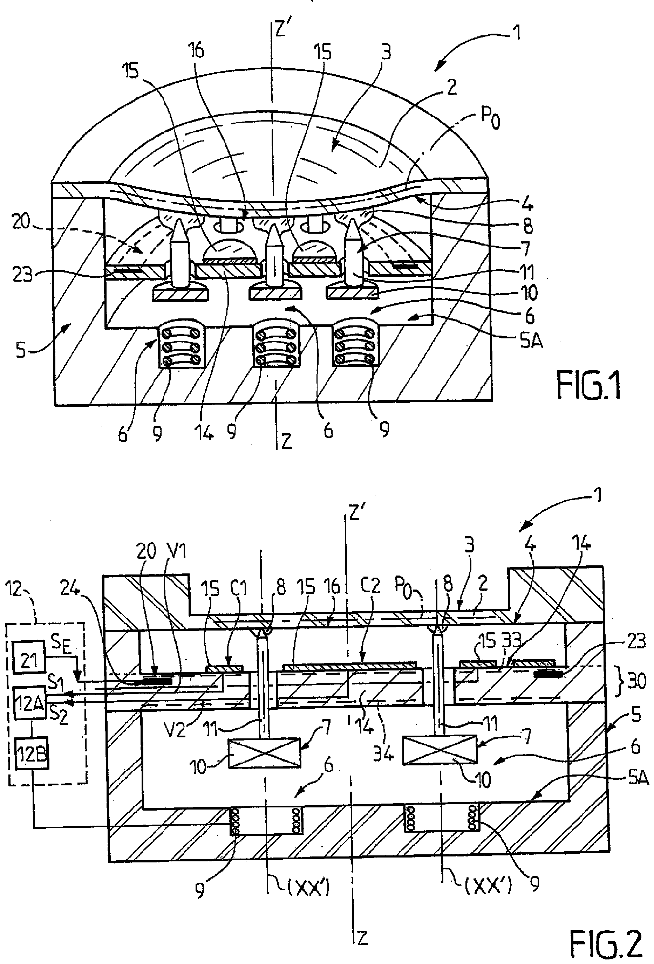

A cet effet, tel que cela est notamment illustré sur les figures 1 et 2, le miroir déformable 1 comporte un organe réflecteur 2 déformable qui possède une surface réfléchissante 3, correspondant à la face supérieure sur lesdites figures, laquelle est destinée à réfléchir le faisceau électromagnétique incident, ainsi qu'une face opposée, dite « *face cachée* » 4, de préférence sensiblement parallèle à ladite surface réfléchissante 3. Bien entendu, l'organe réflecteur 2 pourra être adapté pour réfléchir un faisceau électromagnétique quelconque, et notamment un faisceau lumineux du spectre visible et/ou invisible. Par ailleurs, ledit organe réflecteur 2 pourra être indifféremment formé soit par un ensemble de plaques rigides juxtaposées, indépendantes les unes des autres et mobiles ou articulées les unes par rapport aux autres, de sorte à former des facettes dont la réunion constitue une face réfléchissante fragmentée, ou, au contraire, selon une variante de réalisation préférentielle, par une membrane flexible, la surface réfléchissante 3 étant ainsi avantageusement continue.

Par simple commodité de description, l'organe réflecteur 2 pourra être assimilé à une membrane déformable dans ce qui suit, de sorte que la référence 2 pourra désigner ci-après ladite membrane formant organe réflecteur. L'organe réflecteur 2 est monté sur un support principal 5, de préférence rigide, qui peut notamment former un boîtier creux recouvert par la membrane 2 dans sa partie supérieure, ledit boîtier pouvant éventuellement être étanche. Le matériau constitutif de la membrane 2, ainsi que l'épaisseur de cette dernière ne sont nullement limités, et seront choisis de sorte à conférer à ladite membrane 2 les propriétés mécaniques adéquates, notamment en matière de flexibilité ou de fréquence de résonance, tout en restant bien entendu en accord avec la force que peuvent développer les actionneurs 6 (cf. ci-après) destinés à provoquer sa déformation. A titre d'exemple, ladite membrane 2 pourra être réalisée dans un film polymère, ou encore par une fine nappe de silicium, dont l'épaisseur, de préférence sensiblement constante, pourra être sensiblement comprise entre 10 µm et 50 µm. En outre, le profil moyen P₀ de l'organe réflecteur 2, et plus particulièrement de la surface réfléchissante 3, pourra être librement choisi et notamment être soit sensiblement rectiligne, de telle sorte que la surface réfléchissante 3 est sensiblement plane, tel que cela est représenté sur la figure 2, soit légèrement, et de préférence régulièrement, incurvé, de telle sorte que la surface réfléchissante 3 présente au contraire un profil bombé, de préférence concave, et que cette dernière forme par exemple une coupelle de type calotte sphérique, tel que cela est illustré sur la figure 1, ou encore de type parabolique. De préférence, la surface réfléchissante 3 et la face cachée 4 seront sensiblement parallèles et régulières, et suivront sensiblement le même profil moyen.

Par commodité de description, on considérera, tel que cela est illustré sur les figures, que l'axe optique central (ZZ') du miroir 1 s'étend sensiblement verticalement, selon une direction dite « *axiale* » sensiblement normale à la surface réfléchissante 3, elle-même située au niveau supérieur, et normale au fond 5A du boîtier 5, lui-même situé au niveau inférieur, ledit axe optique central (ZZ') étant de préférence sensiblement parallèle aux parois latérales dudit boîtier 5. Par ailleurs, le contour délimitant latéralement l'organe réflecteur 2, et plus particulièrement la surface réfléchissante 3 déformable, selon une direction dite « *radiale* » sensiblement transverse à l'axe optique (ZZ'), voire perpendiculaire à la direction axiale, pourra être de forme quelconque. Toutefois, ledit contour correspondra de préférence à un polygone, tel qu'un rectangle, préférentiellement à un polygone régulier, tel qu'un carré, ou bien encore à un cercle.

Avantageusement, l'axe optique (ZZ') pourra correspondre à l'axe de révolution, ou à l'axe d'invariance par rotation, du miroir, ledit miroir pouvant notamment se présenter sous la forme d'un cylindre, voire d'un disque, dont l'axe générateur correspond audit axe optique (ZZ'), tel que cela est illustré notamment sur la figure 1 .

Le miroir 1 comporte également une pluralité d'actionneurs 6 agencés en réseau, lesdits actionneurs 6 étant aptes à entraîner l'organe réflecteur 2 localement en déplacement, sensiblement selon une direction de déformation (XX'), de sorte à pouvoir déformer la surface réfléchissante 3. La direction de déformation (XX') est de préférence sensiblement normale à la surface réfléchissante, et sensiblement parallèle à l'axe optique (ZZ') du miroir, de telle sorte que les déformations locales de la surface réfléchissante 3 suivent sensiblement une trajectoire de déformation verticale, de préférence sensiblement rectiligne. Chaque actionneur 6 possédera au moins un équipage mobile 7 fixé à l'organe réflecteur 2, et plus particulièrement au dos de la membrane 2, sur la face cachée 4, afin de pouvoir entraîner localement ledit organe réflecteur 2, et plus particulièrement la surface réfléchissante 3, en déplacement.

La nature de la liaison entre un équipage mobile 7 et la membrane 2 peut faire l'objet de variantes, mais sera de préférence réalisée par un joint de colle 8, réalisé par exemple à l'aide d'une colle élastomère, Ledit joint de colle 8 sera de préférence formé par des points de colle séparés permettant de fixer directement et individuellement l'extrémité supérieure de chaque actionneur 6 à la face cachée 4, au moyen d'une goutte de colle sensiblement ponctuelle. Une telle solution permet avantageusement de limiter la quantité de colle employée, de réduire les phénomènes éventuels de dégazage lorsque le miroir est amené à travailler sous vide, et évite enfin d'ajouter, au dos de la membrane, une surcouche qui aurait pour effet de dégrader ses propriétés mécaniques (alourdissement, abaissement de la fréquence de résonance) et thermiques (dissipation, dilatation inhomogène provoquant un voilage de type bilame). Elle permet en outre d'éviter que la surface occupée par la colle ne déborde sur les organes de la chaîne d'asservissement du miroir, et notamment ne modifie, par exemple en raison de la sensibilité de ladite colle à l'humidité ambiante, d'éventuelles mesures capacitives réalisées au sein de la chaîne d'asservissement, ainsi que cela sera détaillé plus loin. Bien entendu, l'invention n'est nullement limitée à un type particulier d'actionneur, et peut notamment faire appel à toute technologie susceptible de créer un mouvement de déformation ou une dilatation, par exemple mécanique, électrique, électromagnétique, électrostatique, piézoélectrique, pneumatique, hydraulique, thermique, etc.

Par ailleurs, chaque actionneur 6 comprendra de préférence un organe de base 9, par rapport auquel peut s'opérer le déplacement de l'équipage mobile 7 qui lui est associé, et qui forme de préférence un organe d'activation capable de provoquer et de contrôler le déplacement et le maintien en position dudit équipage mobile 7, lui-même avantageusement distinct et indépendant dudit organe de base 9. En outre, ledit organe de base 9, qui pourra être assimilé par commodité de description à un organe d'activation 9 dans ce qui suit, est avantageusement solidaire du support principal 5, et de préférence du fond du boîtier 5A auquel il peut être fixé, voire dans lequel il peut être avantageusement logé ou noyé.

Selon une variante de réalisation préférentielle correspondant à celle représentée sur les figures 1, 2 et 5, les actionneurs 6 seront de type électromagnétique, l'organe de base 9 pouvant être formé par une bobine d'induction qui permet de piloter l'intensité et la polarité du champ magnétique que ledit organe de base 9 applique à l'équipage mobile 7, ce dernier comportant quant à lui de préférence un élément d'entraînement 10 qui peut être formé par un ou plusieurs aimants permanents, et pourra être assimilé, par commodité de description, à un aimant permanent dans ce qui suit.

Avantageusement, l'élément d'entraînement 10 pourra être suspendu à l'organe réflecteur 2 par l'intermédiaire d'une entretoise 11 du genre tige rigide, cette dernière présentant avantageusement une section transverse plus étroite que celle dudit élément 10,

Le miroir 1 comporte au moins un premier capteur C1 et un second capteur C2 qui sont conçus pour fournir respectivement un premier signal de mesure S1 et un second signal de mesure S2, lesdits signaux de mesure S1, S2 étant destinés à être recueillis par un circuit de traitement 12 conçu pour déterminer la forme et/ou la position de ladite surface mobile et/ou déformable 2 à partir desdits signaux de mesure S1, S2. Lesdits premier et second signaux de mesure S1, S2 sont relatifs à la forme et/ou à la position de la surface mobile et/ou déformable 2, et plus précisément à la conformation instantanée adoptée par la surface mobile et/ou déformable 2. De préférence, lesdits premier et second signaux de mesure S1, S2 sont représentatifs de tout ou partie de la forme adoptée au moins localement par la surface 2, et de préférence par la surface réfléchissante 3. Par « *signal relatif* à *la forme* et/ou *à la position* » on désigne ici un signal qui peut être représentatif soit de la position spatiale elle-même soit de la variation temporelle de cette position spatiale (vitesse ou accélération). Afin de recueillir ledit signal, le miroir 1 comprend au moins une première voie de mesure V1 permettant de recueillir le premier signal de mesure S1, ainsi qu'une seconde voie de mesure V2 permettant de recueillir le second signal de mesure S2. De préférence, dans le mode de réalisation préférentiel illustré aux figures, le circuit de traitement 12 est un circuit d'asservissement qui pilote la déformation et/ou le déplacement de ladite surface mobile et/ou déformable 2 formant avantageusement. Dans ce mode de réalisation préférentiel, le circuit de traitement 12 forme donc un circuit d'asservissement pilotant la déformation et/ou le déplacement de l'organe réflecteur 2. A cette fin, le circuit de traitement 12 est donc non seulement conçu pour déterminer la forme et/ou la position de ladite surface mobile et/ou déformable 2 à partir desdits signaux de mesure S1, S2, mais également pour générer des consignes de commande des actionneurs 6 en fonction de la forme et/ou la position de ladite surface mobile et/ou déformable 2 qu'il a déterminée(s) à partir desdits signaux de mesure S1, S2. Dans ce qui suit, il sera fait exclusivement référence, par souci de concision et de simplicité de description, à un circuit de traitement formant circuit d'asservissement, étant entendu que l'invention n'est nullement limitée à cet exemple particulier.

Le circuit d'asservissement 12, qui fait avantageusement partie intégrante du système 1, peut notamment comporter, de manière classique, un circuit de mesure et d'analyse 12A destiné à collecter et à traiter les informations issues des capteurs C1, C2 d'une part, et, de préférence, un circuit de commande 12B destiné à générer des consignes de pilotage de chacun des actionneurs 6 d'autre part. Ledit circuit d'asservissement 12 pourra bien entendu être réalisé à partir de tout circuit, ordinateur, automate programmable ou carte électronique approprié.

De préférence, les capteurs C1, C2 constituent des capteurs de position permettant de relever localement la position, variable, de l'organe réflecteur 2, et plus particulièrement de la portion dudit organe réflecteur qui est située au niveau dudit capteur, par rapport à un support de référence 14 intégré au miroir, et plus particulièrement au boîtier 5. Ledit support de référence 14 pourra notamment s'étendre, en vis-à-vis de l'organe réflecteur 2, et plus particulièrement de la face cachée 4, selon une surface sensiblement normale à l'axe optique (ZZ') et/ou sensiblement parallèle à la surface définie par le profil moyen Po que ledit organe réflecteur 2 adopte globalement lorsqu'il se trouve au repos ou lorsqu'il se trouve dans une position prédéfinie considérée comme position neutre de référence. Bien entendu, lesdits capteurs C1, C2 pourront parfaitement être employés pour mesurer également, ou alternativement, une position relative de la membrane 2 par rapport audit support de référence 14, ou encore une amplitude ou une vitesse de déplacement de ladite membrane 2 et/ou des équipages mobiles 7 associés.

En outre, les capteurs pourront indifféremment être formés par des capteurs inductifs, résistifs, piézo-électriques, voire par des palpeurs ou même des capteurs optiques utilisant par exemple un faisceau laser. Toutefois, les capteurs C1, C2 seront de préférence des capteurs capacitifs et comprendront à cet effet au moins une première armature 15, ici fixe, disposée sur le support de référence 14 en vis-à-vis de l'organe réflecteur 2, et une seconde armature 16, ici mobile, qui est fixée ou venue de matière avec ledit organe réflecteur 2, et située sensiblement à l'aplomb de la première armature 15. La ou les secondes armature(s) 16 pourront éventuellement être fixées à ou formées sur la face cachée 4 de la membrane 2, par exemple par des dépôts métalliques, voire, selon une variante de réalisation, être formées d'un seul tenant avec la membrane 2 lorsque cette dernière est électriquement conductrice, il est à ce titre remarquable que l'utilisation, pour la fixation des organes mobiles 7 à la membrane 2, de joints de colle 8 ponctuels ne recouvrant ou ne chevauchant pas les armatures 15, 16, mais au contraire dégageant les surfaces occupées par ces dernières, évite l'interposition entre lesdites armatures 15, 16 d'une couche de matériau, en l'espèce de colle, qui, en raison notamment de sa sensibilité à l'humidité, risquerait de modifier les caractéristiques de la couche diélectrique, et plus particulièrement sa permittivité, et ainsi de fausser les mesures capacitives.

Par ailleurs, il est également remarquable que les actionneurs 6 peuvent être agencés selon un (premier) réseau géométrique d'actionneurs 6, de préférence régulier, lequel peut comporter un nombre d'actionneurs supérieur ou égal à 10, supérieur ou égal à 50, voire supérieur ou égal à 100. De préférence; lesdits actionneurs 6 sont répartis aux nœuds d'un réseau, qui s'étend à l'aplomb de l'organe réflecteur 2, transversalement à l'axe optique (ZZ'), et préférence sensiblement dans un plan normal audit axe optique (ZZ') et/ou plus particulièrement sensiblement selon le plan d'extension du support de référence 14, et dont les mailles peuvent être par exemple de forme carrée, rhombique, rectangulaire, ou encore hexagonale en nid d'abeille.

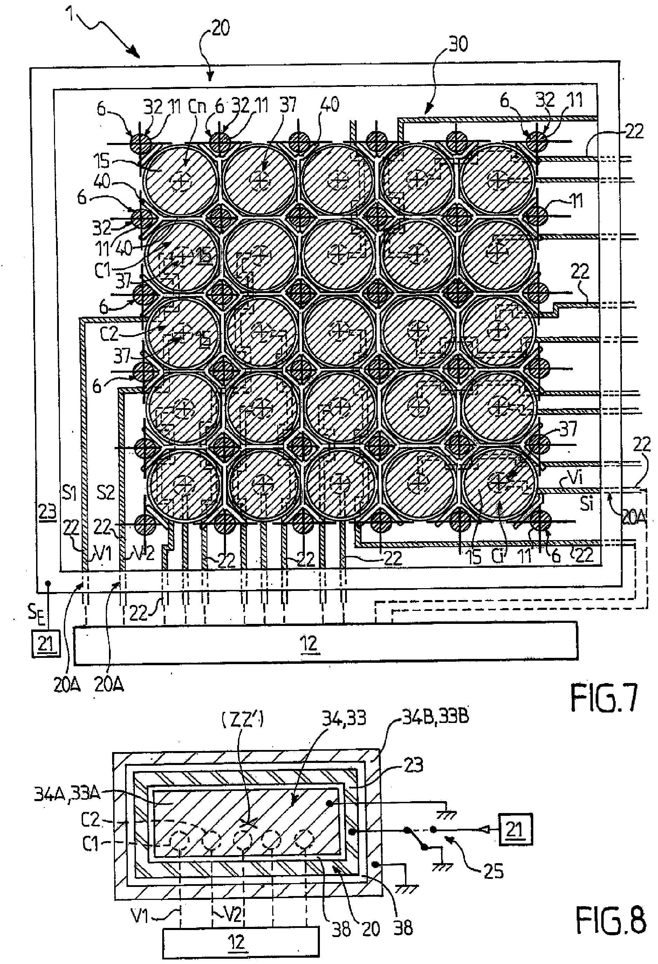

Par ailleurs, le miroir 1 comprend également de préférence une pluralité de capteurs C1, C2, ... Ci,... Cn, avec n entier (n pouvant par exemple être égal à 25 sur la figure 7), disposés sensiblement à l'aplomb de l'organe réflecteur 2 selon un (second) réseau géométrique.

De même que le réseau d'actionneurs 6, le réseau de capteurs C1, C2, Cn s'étale de préférence à l'aplomb de l'organe réflecteur 2, transversalement à l'axe optique (ZZ'), et préférence sensiblement dans un plan normal audit axe optique (ZZ') et/ou plus particulièrement sensiblement selon le support de référence 14. Bien entendu, le nombre, la forme, la superficie et la répartition des différents capteurs C1, C2, Cn ne sont nullement limités, et peuvent être identiques ou au contraire varier d'un capteur à l'autre.

Selon une variante de réalisation préférentielle particulièrement homogène, les armatures, et notamment les premières armatures 15 des différents capteurs C1, C2, Cn présenteront toutes une forme et une superficie sensiblement identiques, et se répartiront selon un pas sensiblement constant, éventuellement sensiblement égal dans les deux directions de l'espace transverses à l'axe optique.

Selon le cas, le réseau de capteurs C1, ... Cn pourra présenter un schéma d'implantation, et plus particulièrement une géométrie et/ou un pas, qui sont égaux, ou bien au contraire différents de ceux du réseau d'actionneurs 6 auquel il se superpose.

Selon une variante de réalisation non représentée, le réseau d'actionneurs 6 et le réseau de capteur C1, Cn pourront être identiques et coïncider, de telle sorte qu'à chaque actionneur 6 correspond un capteur qui lui est sensiblement superposé ou immédiatement, voisin, et de préférence sensiblement concentrique.

Ainsi, la première armature 15 de tout ou partie des capteurs pourra par exemple se présenter sous la forme d'une pastille annulaire percée en son centre de sorte à définir un orifice de passage au travers duquel la tige 11 de l'équipage mobile 7 correspondant peut aller et venir.

Selon une autre variante de réalisation correspondant notamment à la figure 7, les capteurs C1, C2, Cn sont disposés en quinconce par rapport aux actionneurs 6, et peuvent plus particulièrement être sensiblement centrés chacun sur une maille distincte du réseau d'actionneurs 6.

Avantageusement, une telle disposition permet de maximiser la taille des premières armatures 15 en occupant l'espace laissé vacant entre les tiges 11 voisines, ce qui permet au miroir de gagner à la fois en précision d'asservissement, par amélioration du rapport signal/bruit, et en compacité.

Selon l'invention, le miroir 1 comprend un organe d'étalonnage commun 20 qui permet d'injecter simultanément dans la première voie de mesure V1 et dans la seconde voie de mesure V2, un signal d'étalonnage S_{E} connu (en l'espèce indépendant du déplacement et de la déformation de la surface mobile et/ou déformable 2) afin de permettre l'étalonnage de tout ou partie du circuit d'asservissement 12. Avantageusement, en utilisant un organe d'étalonnage 20 commun aux différentes voies de mesure V1, V2, Vn associées aux capteurs C1, C2, Cn, il est possible d'appliquer, à l'aide d'un moyen simple, peu coûteux et compact, un signal-étalon S_{E} connu et maîtrisé, et de relever la transcription, par chaque voie de mesure, dudit signal d'étalonnage sous forme d'un signal-image S'1, S'2, S'n qui renseigne sur l'état de fonctionnement et les caractéristiques de la voie de mesure concernée. Ledit organe d'étalonnage commun 20 est en l'espèce conçu pour que les signaux images S'1, S'2, S'n restitués par lesdites voies de mesure V1, V2, Vn en réponse à l'injection dudit signal d'étalonnage S_{E} soient sensiblement indépendants de la forme et de la position de ladite surface mobile 2. Par « sensiblement *indépendant* »*,* on désigne ici le fait que l'organe d'étalonnage commun 20 est spécifiquement agencé pour que l'influence de la forme et de la position de la surface mobile et/ou déformable 2 sur les signaux images S'1, S'2, S'n soit négligeable par rapport au degré de précision d'étalonnage, étant entendu qu'une influence nulle est bien évidemment impossible à obtenir en pratique. Avantageusement, l'injection simultanée d'un même signal d'étalonnage S_{E} sensiblement identique dans plusieurs voies de mesure, voire dans toutes les voies de mesure, permet de tester et de calibrer rapidement et simplement l'ensemble desdites voies de mesure, ainsi que, le cas échéant, le circuit de mesure 12A voire le circuit de commande 12B. Plus particulièrement, le signal d'étalonnage S_{E} permet de tester toute la portion aval des voies de mesure V1 V2, Vn comprise matériellement entre la zone d'injection dudit signal d'étalonnage S_{E} et le circuit de mesure 12A. On pourra notamment tester ou identifier ainsi, à un instant donné, le fonctionnement et les caractéristiques, par exemple le gain et/ou les paramètres de filtrage, dudit circuit de mesure 12A. A ce titre, l'organe d'étalonnage commun 20 sera de préférence disposé le plus en amont possible des voies de mesure V1, V2, Vn, et notamment au plus près des capteurs qui recueillent les informations utiles à l'asservissement en position de l'organe réflecteur 2, et plus particulièrement de la surface réfléchissante 3, et ce afin de pouvoir tester la majorité, sinon l'intégralité de la chaîne de mesure, depuis la première armature 15 jusqu'au circuit de mesure et de traitement 12A inclus.

A ce titre, il est remarquable que l'organe d'étalonnage 20 peut avantageusement être intégré au miroir 1, et plus particulièrement être logé à l'intérieur du boîtier 5, et de préférence intégré au support de référence 14.

Le signal d'étalonnage S_{E} sera de préférence sensiblement de même nature physique, et plus particulièrement de même nature électrique, que les signaux renvoyés par les capteurs C1, C2, Cn lors du fonctionnement normal du miroir 1. Plus particulièrement, le signal d'étalonnage S_{E} pourra être constitué par un signal électrique de nature et d'amplitude comparables à celles des signaux de mesure S1, S2, ..., Sn et notamment de même fréquence, de même tension et/ou de même intensité que les valeurs caractéristiques desdits signaux de mesure S1, Sn, telles qu'elles sont normalement mesurées et exploitées au cours de l'asservissement en position de la membrane 2, lors du pilotage statique ou dynamique de ladite membrane.

A cet effet, le signal d'étalonnage S_{E} pourra avantageusement être délivré à l'organe d'étalonnage commun 20 par un générateur 21 idoine. Le générateur 21 pourra avantageusement être configurable, de sorte à pouvoir générer tout type de signal d'étalonnage S_{E} approprié, et notamment permettre de modifier la forme (par exemple sinusoïdale, carrée ou triangulaire), la fréquence, l'amplitude en tension ou en intensité, dudit signal. Le cas échéant, le générateur 21 et le circuit d'asservissement 12 pourront coopérer pour synchroniser le signal d'étalonnage S_{E} au signal d'excitation S_{I} qui est appliqué entre les armatures 15, 16 des capteurs pour activer ces derniers et recueillir en réponse le signai de mesure S1, Sn correspondant.

Par ailleurs, la première et la seconde voies de mesure V1 V2, et de préférence la majorité sinon la totalité des voies de mesure V1, V2, Vn, pourront être formées par des pistes conductrices 22, qui seront de préférence toutes de même largeur et de même épaisseur. L'organe d'étalonnage commun 20 sera alors de préférence formé par une électrode 23 qui est commune auxdites pistes 22, De préférence, on réalisera ainsi l'organe d'étalonnage d'un seul tenant, dans une même feuille ou un même bloc de matériau électriquement conducteur passif, auquel on conférera la forme et les dimensions idoines.

De façon particulièrement préférentielle, l'organe d'étalonnage commun 20 sera séparé des voies de mesure, et notamment des première et seconde voies de mesure V1 V2, par une couche diélectrique 24 (électriquement isolante) et coopérera avec lesdites voies de mesure V1, V2, Vn par couplage capacitif.

Avantageusement, on peut réaliser ainsi, de manière particulièrement simple et compacte, un organe d'étalonnage 20 qui ne nécessite pas une prise de contact directe avec les voies de mesure V1, V2 et ne perturbe pas leur fonctionnement en dehors des phases d'étalonnage. A ce titre, les zones d'intersection 20A, au niveau desquelles l'organe d'étalonnage 20 chevauche, et plus particulièrement croise (de préférence de façon sensiblement perpendiculaire), chacune des voies de mesure V1, V2, Vn, seront de préférence sensiblement identiques les unes aux autres dans leurs dimensions, leur géométrie, et leur étendue. Ainsi, lesdites zones d'intersection 20A formeront de préférence des condensateurs de capacité sensiblement identique, la capacité de couplage entre l'organe d'étalonnage commun 20 d'une part et chacune des voies de mesure V1, V2, Vn d'autre part étant de préférence sensiblement similaire d'une intersection 20A à l'autre.

Avantageusement, l'application d'un même signal d'étalonnage S_{E} à l'organe d'étalonnage 20 par le générateur 21 produira ainsi l'apparition d'un signal-image S'1, S'2, S'n en théorie sensiblement identique dans chacune desdites voies de mesure.

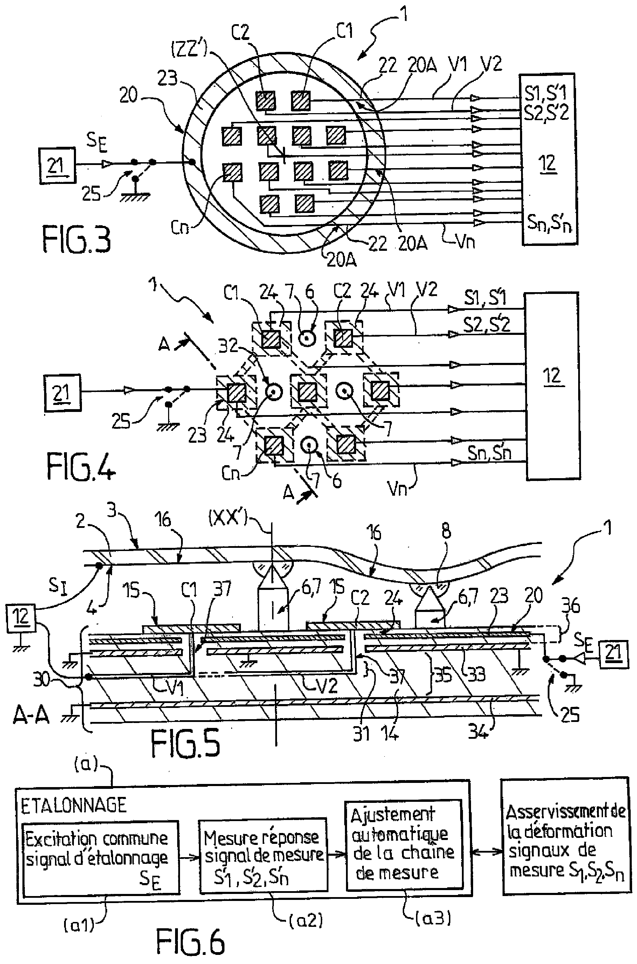

De façon particulièrement préférentielle, tel que cela est notamment représenté sur la figure 7, l'organe d'étalonnage commun 20 croisera de préférence les voies de mesure V1, V2, Vn de façon sensiblement perpendiculaire à la direction longitudinale de ces dernières. A ce titre, la variante de réalisation schématisée sur la figure 3 pourra en pratique présenter des pistes 22 qui s'étendent de façon sensiblement radiale par rapport à l'électrode d'étalonnage commune 23, elle-même sensiblement circulaire. Selon une variante de réalisation correspondant notamment à celle de la figure 4, l'organe d'étalonnage commun 20 peut comporter une pluralité de plages conductrices 24 électriquement reliées entres elles disposées chacune sensiblement à l'aplomb du capteur C1, C2, Cn correspondant, avantageusement à l'opposé de l'organe réflecteur 2 par rapport audit capteur. En d'autres termes, les plages conductrices 24 pourront avantageusement être disposées chacune en vis-à-vis d'un capteur, sous la première armature 15 de ce dernier, tel que cela est illustré sur les figures 4 et 5. De préférence, les plages conductrices 24 présenteront chacune une superficie supérieure ou égale à celle de l'armature 15 du capteur, et couvrant de préférence sensiblement en totalité cette dernière.

Les intersections 20A pourront alors correspondre sensiblement à la surface de recouvrement couverte à la fois (d'un côté) par une plage conductrice 24 et (de l'autre côté) par l'armature 15 du capteur correspondant.

A titre d'exemple, le réseau des capteurs C1, C2, Cn et le réseau identique des plages conductrices 24 pourront avantageusement être superposés l'un à l'autre de sorte à coïncider, tout en étant décalés en quinconce d'un demi-pas par rapport au réseau des actionneurs 6, tel que cela est illustré sur la figure 4.

Selon une autre variante de réalisation correspondant notamment aux figures 1, 2, 3, 7 et 8, l'organe d'étalonnage 20 est disposé en périphérie du miroir, et de préférence formé par une électrode 23 qui entoure l'ensemble du réseau des capteurs C1, C2, Cn et, le cas échéant, l'ensemble du réseau des actionneurs 6. A ce titre, l'électrode 23 peut notamment présenter un contour, de préférence fermé, sensiblement conjugué à celui du miroir 1, et plus particulièrement au contour interne du boîtier 5, et peut notamment se présenter sous la forme d'un anneau sensiblement circulaire, tel que cela est illustré sur la figure 3, ou encore d'un cadre sensiblement carré (figure 7) ou rectangulaire (figure 8).

De préférence, les voies de mesure V1, V2, Vn se déportent quant à elles depuis leur capteur C1, C2, Cn respectif vers la périphérie du miroir 1, et plus particulièrement sensiblement de l'intérieur, et notamment du centre de l'espace délimité par l'électrode 23, vers l'extérieur, jusqu'au bord du boîtier 5 voire au-delà, tel que cela est illustré sur les figures 2, 3, 7 et 8. Selon une telle configuration, les voies de mesure V1, V2, Vn peuvent ainsi avantageusement croiser, de façon de préférence sensiblement perpendiculaire, l'électrode 23 alors qu'elles quittent le réseau, de préférence dense, des capteurs pour rejoindre la périphérie du miroir et plus particulièrement le circuit de mesure 12A, éventuellement par l'intermédiaire d'un bornier de connexion auquel est relié ledit circuit de mesure 12A si ce dernier est extérieur au boîtier 5. Avantageusement, un tel agencement permet de loger l'organe d'étalonnage 20 dans une zone peu encombrée du miroir, et plus particulièrement de l'intérieur du boîtier, qui est située à l'écart de la portion déformable de l'organe réflecteur 2, tout en permettant d'injecter le signal d'étalonnage S_{E} relativement en amont dans les voies de mesure V1, V2, Vn.

De préférence, l'organe d'étalonnage 20 est commun à l'ensemble des voies de mesure V1, V2, Vn, y compris, par exemple, si ledit miroir comporte un réseau d'au moins 10, 20, 50, voire 100 capteurs relevés chacun par une voie de mesure distincte. En effet, le principe de réalisation et l'agencement de l'organe d'étalonnage 20 conforme à l'invention peuvent avantageusement être étendus et adaptés quel que soit le nombre de capteurs employés, la superficie totale qu'ils occupent, et la densité spatiale de leur répartition.

Par ailleurs, selon une caractéristique qui peut constituer une invention à part entière, l'organe d'étalonnage commun 20 peut être associé à des moyens de commutation 25, par exemple un commutateur mécanique, électromécanique ou encore électronique du genre transistor, qui permettent de raccorder ledit organe d'étalonnage 20 alternativement soit au générateur de signal d'étalonnage 21, soit à la masse. De façon particulièrement, avantageuse, ceci permet d'éviter que l'organe d'étalonnage commun 20 ne crée un couplage entre les voies de mesure V1, V2, Vn et, mieux encore, d'utiliser ledit organe d'étalonnage, et plus particulièrement l'électrode 23, comme un écran de blindage électromagnétique protégeant des perturbations électromagnétiques les capteurs C1, C2, Cn et/ou les voies de mesure qui leur sont associées, au moins lors des périodes pendant lesquelles l'organe d'étalonnage 20 n'est pas sollicité pour injecter le signal d'étalonnage S_{E}.

Par ailleurs, l'organe d'étalonnage commun 20 occupe de préférence une position invariante par rapport aux première et seconde voies de mesure, et de préférence, plus globalement, par rapport à l'ensemble des voies de mesure V1, V2, Vn. Plus particulièrement, l'organe d'étalonnage commun 20 pourra avantageusement être distinct et détaché de la membrane 2 et occuper une position fixe par rapport au boîtier, et notamment sur le support de référence 14 ou à l'intérieur de ce dernier, Un tel agencement permet avantageusement de bénéficier d'un montage simple, mécaniquement stable, robuste et sensiblement invariant dans la durée, permettant de bénéficier entre l'organe d'étalonnage 20 et chacune des voies de mesure V1, V2, Vn d'une capacité sensiblement, constante, peu affectée par les conditions d'utilisation du miroir 1 et les changements survenant dans l'environnement de celui-ci.

Par ailleurs, l'organe d'étalonnage 20 commun et les voies de mesure V1, V2, Vn appartiennent à une même structure multicouche 30, tel que cela est notamment illustré sur les figures 5 et 7, ladite structure multicouche 30 pouvant par exemple être du genre plaque de circuit imprimé. De préférence, la structure multicouche 30 forme le support de référence 14, préférentiellement rigide, par rapport auquel l'organe réflecteur 2 se déplace lorsqu'il se déforme, support de référence 14 qui porte également de préférence les capteurs C1, C2, Cn, et plus particulièrement la première armature 15 de chacun d'entre eux. Avantageusement, on peut ainsi regrouper l'organe d'étalonnage 20, et plus particulièrement l'électrode 23, avec au moins une partie sinon la totalité des voies de mesure V1, V2, Vn, et plus globalement intégrer ces éléments au sein d'une structure multicouche qui peut avantageusement coïncider avec le support de référence 14, ce qui permet de réaliser ainsi un sous-ensemble multicouche cohérent, qui peut être distinct du boîtier 5 et rapporté à l'intérieur de ce dernier, Avantageusement, un tel agencement permet de simplifier la fabrication du miroir 1 et son assemblage à partir de sous-ensembles fonctionnels, tout en permettant audit miroir de gagner en compacité et en robustesse. De préférence, la structure multicouche 30 comprendra au moins une couche de câblage conductrice 31 dans laquelle sont formées une pluralité de pistes 22, avantageusement séparées et connectées chacune à un capteur C1, C2, Cn. De préférence, les pistes 22 seront situées, ici sensiblement à l'horizontale, dans un plan sensiblement normal d'une part à l'axe optique (ZZ') et d'autre part aux directions de déformation (XX'), ce qui permet de gagner en compacité, d'abaisser le coût de fabrication, et d'éviter les couplages parasites entre voies, en évitant de créer des croisements des pistes 22 entre elles, c'est-à-dire entre les différentes voies de mesuré V1, V2, Vn qui restent ainsi de préférence bien séparées les unes des autres. De préférence, toutes les pistes seront situées dans un même plan, au sein d'une même couche unique. Toutefois, si la densité des capteurs et des pistes l'exige, lesdites pistes 22 pourront être réparties en plusieurs couches formant des strates superposées, dans plusieurs plans sensiblement parallèles. Au besoin, les pistes 22 pourront également présenter un tracé sinueux, dans un même plan horizontal, tel que cela est représenté sur la figure 7, et/ou verticalement entre plusieurs plans distincts, afin de s'étendre de façon sensiblement parallèles les unes aux autres en direction d'un même bord latéral du miroir, tout en évitant les obstacles formés par les actionneurs 6 ou les autres pistes 22.

Par ailleurs, la structure multicouche 30 est percée de passage 32 qui permettent aux actionneurs 6, et plus particulièrement aux équipages mobiles 7, de traverser ladite structure multicouche 30. De façon particulièrement avantageuse, ladite structure multicouche 30 pourra ainsi être disposée au voisinage immédiat de la membrane 2, et plus particulièrement de la face cachée 4, dans l'espace interstitiel situé au niveau de la portion supérieure de l'actionneur 6, et plus particulièrement entre l'extrémité des équipages mobiles reliés à la membrane et l'extrémité opposée où se situe l'aimant 10. Plus globalement, le support de référence 14 intermédiaire sera de préférence disposé entre l'organe réflecteur 2 et le fond du boîtier 5A, et de façon particulièrement préférentielle dans l'espace interstitiel compris entre la face cachée 4 de l'organe réflecteur 2 et la portion la plus large des actionneurs, et notamment de leurs équipages mobiles 7, et/ou, de manière alternative ou cumulative à cette disposition, dans l'espace interstitiel compris entre l'extrémité proximale des équipages mobiles 7 (c'est-à-dire l'extrémité supérieure, qui est la plus proche de l'organe réflecteur 2) et l'extrémité distale de ces derniers (c'est-à-dire l'extrémité inférieure, qui est la plus éloignée de l'organe réflecteur 2), et plus particulièrement entre la face cachée 4, à distance de cette dernière, et la portion supérieure de l'aimant permanent 10. Les passages 32 permettront alors aux tiges 11 de traverser ledit support de référence 14. Avantageusement, un tel agencement permet entre autres de disposer les capteurs C1, C2, Cn, ainsi que leur câblage, dans un espace interstitiel d'ordinaire inutilisé, et de surcroît de les placer de manière sensiblement chevauchante avec les actionneurs 6. Un tel étagement vertical permet donc de répartir sur un étage inférieur les parties les plus encombrantes des actionneurs 6, notamment les bobines 9, tandis que l'on place les armatures 15 des capteurs à un étage supérieur, en vis-à-vis direct de la membrane, en laissant subsister une distance d'écartement très fine, par exemple de l'ordre de 100 µm, et de préférence occupée seulement par de l'air, entre les deux armatures 15, 16 de chaque capteur. Bien entendu, une telle disposition permet notamment d'optimiser et de maximiser la surface utile des armatures 15, et ainsi le gain et la précision des capteurs, dont le fonctionnement, et notamment la capacité, ne sont pas parasités par la présence de corps massifs et notamment de portions des actionneurs 6.

Par ailleurs, la structure multicouche 30 présente de préférence un premier écran de protection 33, en l'espèce orienté vers la membrane 2, et un second écran de protection 34, distant de premier écran et orienté dans la direction opposée, en l'espèce vers le fond du boîtier 5A, lesdits écrans de protection 33, 34 étant électriquement conducteurs de sorte à former un blindage électromagnétique délimitant un tunnel 35 dans lequel passent les voies de mesure \/1, V2, Vn. Avantageusement, en reliant les écrans 33, 34 à la masse, on peut isoler le tunnel 35 des perturbations électromagnétiques et préserver les signaux mesurés S1, S2, Sn, S'1, S'2, S'n, même si ceux-ci sont très faibles, ce qui permet d'obtenir, au moyen d'une structure au demeurant particulièrement compacte et peu encombrante, un excellent rapport signal sur bruit qui permet à la chaîne de mesure de gagner en précision, Tel que cela est illustré sur la figure 5, le premier écran de protection 33 peut lui-même être recouvert, du côté situé vers la membrane 2, d'une couche d'isolation 36 électriquement isolante (diélectrique), à la surface libre de laquelle sont disposées les premières armatures 15, lesquelles sont de préférence sensiblement planes. Les pistes 22 pourront alors sortir au dos desdites armatures 15, afin de plonger dans le support de référence 14 en traversant successivement la couche isolante supérieure 36 puis le premier écran de protection 33, à travers des puits verticaux métallisés, où « *via* » 37, situés de préférence à l'aplomb du centre des armatures 15, pour dégager ensuite transversalement en direction de la périphérie du support 11, et plus particulièrement de la paroi latérale du boîtier 5 située sensiblement à l'aplomb du pourtour périphérique de la membrane 2, d'où un connecteur permet au circuit de mesure 12A de recueillir les signaux S1, S2, Sn.

Selon une variante de réalisation illustrée sur les figures 4 et 5, l'électrode 23 de l'organe d'étalonnage 20 pourra avantageusement être interposée dans la couche d'isolation 36, entre les premières armatures 15 des capteurs et le premier écran de protection 33, à distance de chacun de ces deux éléments, de sorte à pouvoir injecter le signal d'étalonnage S_{E} directement au niveau des armatures 15, et plus particulièrement au dos de ces dernières, et ainsi tester l'ensemble de la chaîne de mesure.

Par ailleurs, selon une autre caractéristique qui peut être ou non combinée aux précédentes, et former le cas échéant une invention à part entière, l'électrode 23 de l'organe d'étalonnage 20 peut avantageusement être réalisée dans une couche conductrice située au même niveau que la couche conductrice constitutive de l'un ou l'autre des écrans 33, 34 et notamment du second écran 34, tel que cela est illustré sur la figure 8.

En particulier, l'électrode 23 peut prendre la forme d'une piste, de préférence fermée sur elle-même, qui borde extérieurement une première portion (radialement) interne 33A, 34A de l'écran 33, 34, portion interne que ladite électrode 23 entoure de préférence en totalité à la manière d'un cerclage.

Ladite électrode 23 peut également être entourée elle-même par une seconde portion externe 33B, 34B du même écran 33, 34, ladite électrode 23 se trouvant ainsi (radialement) comprise entre d'une part ladite première portion interne 33A, 34A de l'écran 33, 34, et d'autre part la seconde portion externe 33B, 34B, ladite électrode 23 étant toutefois séparée de chacune de ces deux portions interne et externe par des frontières 38 électriquement isolantes qui interrompent la couche conductrice en délimitant les bords interne et externe de ladite électrode.

En d'autres termes, l'électrode 23 peut avantageusement se trouver sensiblement prise (radialement) en sandwich entre deux portions sensiblement concentriques de l'écran 34, dans le même plan transverse à l'axe (ZZ') du miroir.

Ainsi, l'organe d'étalonnage 20 peut être formé par une électrode 23 appartenant à la même couche conductrice que celle du premier écran de protection 33 ou du second écran de protection 34, ladite électrode formant une plage périphérique bordant extérieurement l'écran de protection ou formant une plage intermédiaire sensiblement emboîtée entre deux portions concentriques 33A, 33B, 34A, 34B dudit écran de protection. De façon particulièrement avantageuse, une telle disposition permet de fabriquer facilement et à moindre coût, et de manière très peu encombrante, une électrode 23 qui peut alternativement être utilisée soit comme une portion d'organe d'étalonnage 20 lorsqu'elle est connectée, par les moyens de commutation 25, au générateur 21, ou au contraire comme écran de protection lorsqu'elle est connectée à la masse et assure ainsi sensiblement la continuité de l'écran 33, 34 qui lui est coplanaire.

On peut ainsi cumuler les avantages de la présence d'un organe d'étalonnage commun aux différentes voies de mesure, avec la compacité de la structure et l'excellente protection des signaux mesurés en dehors des phases d'étalonnage.

Bien entendu, le support de référence 14, et plus particulièrement la structure multicouche 30, pourra intégrer certains composants électroniques, notamment des composants passifs tels que les résistances ou les condensateurs, appartenant au circuit de mesure 12A et utiles au traitement des signaux S1, S2, Sn issus des capteurs. A ce titre, la structure multicouche 30 pourra avantageusement former d'un seul tenant une véritable carte électronique embarquée, de type « *multi chip module* » (MCM), dans laquelle certains composants, notamment des composants passifs tels que résistances ou condensateurs, pourront être réalisés par des dépôts conducteurs ou semi-conducteurs à la surface inférieure ou supérieure, ou même dans les couches profondes, de ladite structure 30, en permettant ainsi l'acquisition et le traitement au moins partiel des signaux de mesure représentatifs de la forme de l'organe réflecteur 2.

Le cas échéant, les signaux issus des capteurs pourront en outre être multiplexés, éventuellement par une électronique miniaturisée embarquée dans le boîtier 5 voire sur le support de référence 14, afin de réduire la complexité et le coût de l'électronique de traitement appartenant au circuit de mesure 12A.

Par ailleurs, selon une caractéristique préférentielle qui peut également constituer une invention à part entière, le support de référence 14, et plus particulièrement la structure multicouche 30, comporte, tel que cela est illustré sur la figure 7, une ligne de garde 40 électriquement conductrice, destinée à être reliée à la masse et qui forme un réseau de cloisons séparant les capteurs C1, C2, Cn des actionneurs 6, ainsi que les capteurs C1, C2, Cn entre eux, de sorte à limiter les phénomènes de couplage ou de variation de capacité susceptibles de perturber le fonctionnement desdits capteurs. Ladite ligne de garde 40 peut avantageusement se présenter sous la forme d'un réseau de bandes conductrices serpentant à la surface supérieure du support 14, entre les actionneurs 6, les passages 32, et les armatures 15, pour former de préférence des alvéoles, notamment carrées ou rhombiques, autour de chacun d'eux.

Bien entendu, la réalisation avantageuse de la structure multicouche 30, et plus particulièrement du support de référence 14, sous forme d'une plaque de circuit imprimé permet notamment de réaliser, entre autres, les premières armatures 15, au moyen de pastilles conductrices, les pistes 22 au moyen de bandes de cuivre, et les écrans de protection 33, 34, la ligne de garde 40 ou encore l'électrode 23 sous forme de couches ou de bandes conductrices planes, sensiblement continues et intimement intégrée dans la structure multicouche 30, et ce par des procédés peu coûteux et bien maîtrisés tels que la photolithographie et le dépôt galvanique.

Bien entendu, l'homme du métier pourra adapter l'invention en combinant ou en isolant librement l'une ou l'autre des caractéristiques susmentionnées.

Bien entendu, l'invention concerne également en tant que telle toute installation intégrant un ou plusieurs miroirs déformables 1 conformes à l'invention, de même que tout sous-ensemble de type structure multicouches 30 tel que décrit plus haut et formant une pièce détachée comportant au moins une première et une seconde voie de mesure V1, V2 ainsi qu'un organe d'étalonnage commun 20 du type électrode 23 permettant d'injecter, notamment par couplage capacitif, un signal d'étalonnage S_{E} simultanément dans la première et la seconde voie de mesure.

Par ailleurs, l'invention concerne bien entendu un procédé d'étalonnage d'un circuit de traitement 12 d'un système 1 comprenant une surface mobile et/ou déformable 2, ainsi qu'au moins un premier et un second capteur C1, C2, Cn conçus pour fournir respectivement un premier et un second signal de mesure S1, S2, Sn relatifs à la forme et/ou à la position de ladite surface mobile et/ou déformable 2 et destinés à être recueillis, au moyen respectivement d'une première et d'une seconde voie de mesure V1 , V2, par ledit circuit de traitement 12, lequel est conçu pour déterminer la forme et/ou la position de ladite surface mobile et/ou déformable 2 à partir desdits signaux de mesure S1, S2. Ledit système 1 est de préférence conforme à la description qui précède, et est avantageusement formé par un miroir déformable, tel que celui décrit en détails ci-avant et auquel il sera fait exclusivement référence dans ce qui suit par souci de simplicité et concision. Dans ce cas, ladite surface mobile et/ou déformable 2 forme avantageusement un organe réflecteur, ainsi que cela a été exposé en détails ciavant. Comme exposé précédemment, le circuit de traitement 12 est de préférence un circuit d'asservissement pilotant la déformation et/ou le déplacement de ladite surface mobile et/ou déformable 2.

Un tel procédé va être maintenant décrit en référence aux variantes de réalisation illustrées sur les figures, et notamment en référence au schéma-bloc de la figure 6,

Selon l'invention, ledit procédé comporte une étape (a) d'étalonnage commun qui comprend une sous-étape (a1) d'injection au cours de laquelle on injecte simultanément dans chacune des voies de mesure V1, V2, Vn un signal d'étalonnage S_{E} prédéfini, puis une sous-étape (a2) de comparaison, au cours de laquelle on compare les signaux-images S'1, S'2, S'n. restitués par lesdites voies de mesure V1, V2, Vn, au signal d'étalonnage S_{E} qui leur correspond, les signaux images S'1, S'2, S'n étant sensiblement indépendants de la forme et de la position de ladite surface mobile 2 (comme exposé précédemment), puis une sous-étape (a3) de correction au cours de laquelle on modifie une ou plusieurs caractéristiques du circuit d'asservissement 12, telles que le gain respectif de chaque voie de mesure V1, V2, Vn, afin d'obtenir au niveau de chaque voie de mesure un signal-image fidèle au signal d'étalonnage qui lui est appliqué. Plus particulièrement, on pourra à cet effet faire basculer le moyen de commutation 25 de sorte à déconnecter l'électrode 23 de la masse pour la relier au générateur 21, puis appliquer à ladite électrode 23, grâce audit générateur 21, un signal d'étalonnage S_{E} prédéfini, typiquement un signal électrique alternatif, de sorte à pouvoir recueillir et mesurer l'intensité du courant du signal-image S'1, S'2, S'n qui circule dans chaque voie de mesure du fait du couplage capacitif existant entre ladite électrode 23, excitatrice, avec les pistes 22. De façon particulièrement préférentielle, on injecte sensiblement le même signal d'étalonnage à l'ensemble des voies de mesure, de sorte à solliciter de manière sensiblement identique chacune desdites voies et ainsi recueillir en réponse un signal image S'1, S'2, S'n en principe sensiblement égal dans chacune desdites voies de mesure.

De préférence, afin de pouvoir tester les voies de mesure dans des conditions réalistes, et ainsi les étalonner au plus près de leurs conditions réelles de fonctionnement, le signal d'étalonnage S_{E} est constitué par un signal électrique de nature et d'amplitude comparables à celles des signaux de mesure normalement recueillis dans le cadre du fonctionnement du miroir. En particulier, le signal d'étalonnage S_{E} peut être sensiblement de même fréquence et de même tension ou de même intensité que les valeurs usuelles ou prévisibles relevées dans les voies de mesure lorsque les capteurs C1, C2, Cn sont alimentés par un signal d'excitation S₁ principal et qu'ils renseignent sur l'activité de l'organe réflecteur 2, et plus particulièrement sur la nature et les variations du profil de la déformée de la membrane 2.

Avantageusement, grâce à l'organe d'étalonnage 20 qui injecte un signal d'étalonnage S_{E} « *réaliste* » prédéterminé, on peut reproduire de manière directe, dans les voies de mesure, et plus globalement dans le circuit d'asservissement 12, des conditions qui simulent un état fictif du miroir, librement choisi et maîtrisé, auquel correspond une configuration fictive connue des capteurs C1, C2, Cn, et par conséquent des valeurs de signaux-images S'1, S'2, S'n attendus. Selon le cas, on pourra rechercher si des écarts relatifs sont constatés d'une voie à l'autre entre les signaux-images S'1, S'2, S'n effectivement issus des différentes voies de mesure, et/ou si des écarts absolus sont constatés, dans l'une ou l'autre voie de mesure, entre le signal-image S'1, S'2, S'n effectivement recueilli et le signal-image qui serait théoriquement attendu pour la voie considérée (au regard du signal d'étalonnage S_{E} injecté), si ladite voie de mesure était normalement fonctionnelle et convenablement étalonnée. En conséquence, on pourra détecter une éventuelle défaillance de l'une des voies de mesure, ou bien corriger les caractéristiques des voies de mesure V1, V2, Vn concernées de sorte à obtenir dans chacune d'elle le signal-image absolu attendu et/ou de sorte à harmoniser de manière relative, entre les différentes voies, leurs réponses respectives.

Selon la disposition de l'électrode 23 par rapport à la chaîne de mesure, les grandeurs caractéristiques du signal d'étalonnage S_{E} pourront notamment être voisines de celles du signal d'excitation S₁ (par exemple si le couplage de ladite électrode se fait en amont, avec les premières armatures 15) et/ou de celles des signaux de mesure fonctionnels S1, S2, Sn (par exemple si le couplage intervient en aval des capteurs et de leurs armatures 15, au niveau des pistes 22 elles-mêmes) qui correspondent à la réponse que produisent les capteurs capacitifs lorsqu'ils sont soumis audit signal d'excitation S_{I} et que leur capacité varie, du fait que leurs armatures 15, 16 se rapprochent ou s'éloignent l'une de l'autre, sur une plage de distance (axiale) correspondant sensiblement à la course de la membrane 2 et de l'équipage mobile 7 qui lui est associé.

De préférence, le signal d'excitation S_{I} sera créé en appliquant une tension alternative entre d'une part la membrane 2 et d'autre part les premières armatures 15 de chaque capteur, et en alimentant de préférence ladite membrane 2 depuis la périphérie de cette dernière. A ce titre, il est remarquable que, selon une caractéristique qui peut constituer une invention à part entière, le circuit de mesure 12A est de préférence conçu pour être insensible à la phase des signaux de mesure S1, S2, Sn, ou des signaux-images S'1, S'2, S'n de telle sorte que la valeur du signal mesuré sera de préférence interprétée uniquement au regard de son amplitude. A cet effet, on pourra avantageusement utiliser un redresseur double alternance, ou de préférence deux redresseurs simple alternance dont on superposera les signaux, pour recueillir et filtrer le signal alternatif issu de chaque capteur C1, C2, Cn, et plus particulièrement recueilli par chaque voie de mesure, et observer l'intensité moyenne du signal redressé, laquelle dépend uniquement de l'intensité de crête dudit signal et non de la phase dudit signal. Avantageusement, un tel agencement permet de s'affranchir d'erreurs de mesure alors même que l'on observe généralement un déphasage depuis la périphérie vers le centre de la membrane, lorsque l'on décrit le rayon de la membrane 2 en direction de son centre, en raison des pertes résistives (mêmes minimes) de la membrane conductrice et des pertes capacitives intermédiaires dues aux différents capteurs successivement alimentés.

Avantageusement, le procédé d'étalonnage conforme à l'invention peut être mis en œuvre au sein d'un procédé plus global d'asservissement permettant de piloter, de surveiller, de contrôler dynamiquement la déformation de l'organe réflecteur 2 au moyen d'une pluralité d'actionneurs 6 et d'une pluralité de capteurs C1, C2, Cn indépendants.

Selon une variante de fonctionnement, les capteurs étant alimentés par un signal d'excitation S₁ principal de sorte à pouvoir produire en réponse leur signal de mesure S1, S2, Sn selon le profil de déformation de la membrane 2, le signal d'étalonnage S_{E} est appliqué aux voies de mesure V1, V2, Vn de sorte à se superposer aux signaux de mesure S1, S2, Sn fonctionnels.

De façon particulièrement préférentielle, le signal d'étalonnage S_{E} peut alors être appliqué aux voies de mesure en décalage de phase, et plus particulièrement en opposition de phase avec le signal de mesure S1, S2, Sn principal et / ou, en décalage ou en opposition de phase avec le signal d'excitation S₁.

Avantageusement, ceci permet d'appliquer de façon simultanée, et éventuellement de façon permanente, à la fois une excitation fonctionnelle des capteurs, en appliquant le signal d'excitation S₁ entre d'une part l'armature mobile commune 16 que forme la membrane 2 et d'autre part l'armature fixe individuelle 15 propre à chaque capteur, et, simultanément, un signal d'étalonnage S_{E}, appliqué entre d'une part l'électrode 23, distincte et indépendante de la membrane 2, et d'autre part ladite armature fixe 15 ou la piste 22 correspondant à la voie de mesure V1, Vn qui lui est associée.

On peut ainsi d'une part mesurer la déformée de la membrane 2 en recueillant, par un redressement ou un filtrage adapté, les signaux de mesure S1, S2, Sn correspondant à la réponse au signal d'excitation S_{I} émis selon la première phase, et d'autre part, sensiblement dans le même temps, au cours d'un même cycle, surveiller l'état des voies de mesure, en recueillant, par un redressement ou un filtrage distinct du précédent, les signaux-images S'1, S'2, S'n correspondant à la réponse au signal d'étalonnage S_{E} émis selon la seconde phase. L'invention permet ainsi de détecter sensiblement en temps réel les anomalies de fonctionnement et/ou les dérives, par exemple thermiques ou électroniques, des différentes voies de mesure, et/ou encore normaliser les signaux de mesure S1, S2, Sn en les rapportant au signal image S'1, S'2, S'n du signal d'étalonnage S_{E} empruntant le même canal (la même voie de mesure V1, V2, Vn). Avantageusement, on peut par conséquent corriger immédiatement et quasiment en temps réel les éventuels défauts ou dérives de la chaîne de mesure.

Selon une autre variante de fonctionnement, le procédé peut permettre d'alterner, de manière exclusive, soit des phases de fonctionnement normal, dans lesquelles (seul) le signal d'excitation S₁ principal est appliqué au capteur afin de mesurer la déformation de la membrane 2, soit des phases d'étalonnage, lors desquelles (seul) le signal d'étalonnage S_{E} est appliqué. Plus particulièrement, le signal d'excitation S_{I} peut alors être interrompu lors de l'application aux voies de mesure du signal d'étalonnage S_{E},

Un tel système présente l'avantage de ne pas créer d'interférences entre le signal d'étalonnage S_{E} et les signaux principaux S1, S2, Sn qui traduisent la position et/ou les déplacements locaux de la membrane 2 au droit de chaque actionneur 6.

A ce titre, il est notamment envisageable d'étalonner périodiquement le miroir 1, et plus particulièrement le circuit de mesure 12A du circuit d'asservissement 12, en interrompant ponctuellement la mesure de la déformation réelle, mais sans pour autant interrompre le maintien en position du miroir, c'est-à-dire l'excitation des actionneurs 6 eux-mêmes, puis en réalisant un étalonnage, et ensuite en reprenant la surveillance de la déformation par le circuit de mesure.

Bien entendu, lorsque cesse la phase d'étalonnage, l'électrode 23 peut avantageusement être déconnectée du générateur 21 pour être reconnectée à la masse afin de contribuer à la protection électromagnétique des pistes 22.

Avantageusement, il est remarquable que le procédé d'étalonnage et le miroir 1 conformes à l'invention ne nécessitent pas de démonter le miroir 1, ni même d'interrompre véritablement son service, pour procéder à l'étalonnage, en particulier lorsque ledit étalonnage se pratique de manière superposée et simultanée à la mesure normale de la position réelle de l'organe réflecteur 2. Le cas échéant, même à supposer que l'étalonnage et la surveillance de la déformation soient alternés, le circuit d'asservissement 12 peut continuer à piloter en permanence la position et/ou le déplacement des actionneurs 6. A ce titre, la configuration de l'organe réflecteur 2 peut avantageusement être « figée » dans la dernière configuration qui précède immédiatement la phase d'étalonnage, tandis que la surveillance est suspendue, les consignes appliquées aux actionneurs 6 pouvant à cet effet être mémorisées dans une mémoire tampon et maintenues à leur dernière valeur connue pendant la durée nécessaire à l'étalonnage. La configuration de l'organe réflecteur 2, et plus particulièrement lesdites consignes, pourront ensuite être de nouveau rafraîchies sitôt la phase d'étalonnage terminée et la phase de surveillance active reprise.

Avantageusement, le miroir 1 conforme à l'invention pourra constituer un micro-miroir dont le ou les actionneurs 6 possèdent une course utile sensiblement comprise entre 1 µm et 20 µm voire 40 µm, dont la précision de positionnement et d'asservissement par rapport à une consigne donnée est sensiblement comprise entre 1 nm et 10 nm, et dont la consigne peut être modifiée selon une fréquence de rafraîchissement qui est sensiblement comprise entre 10Hz et 10kHz.

En particulier, la membrane 2 pourra présenter une dimension transverse, et notamment un diamètre, sensiblement compris entre 5 mm et 30 mm, une épaisseur sensiblement comprise entre 5 µm et 50 µm, la hauteur hors-tout du boîtier étant sensiblement comprise entre 10 mm et 100 mm, l'entraxe d'espacement linéaire entre deux actionneurs 6 entre 1 mmà 3 mm, la largeur de tige 11 entre 50 µm et 300 µm, le diamètre d'aimant 10 entre 500 µm et 1000 µm, et le diamètre de bobine 9 entre 1 000 µm et 1 700 µm. La capacité des capteurs C1, C2, Cn capacitifs pourra être sensiblement inférieure à 1 pf, voire à 0,1 pf, et notamment sensiblement comprise entre 0,04 pf ou 0,05 pf et 0,5 pf.

Le signal d'excitation S₁. ainsi que le signal d'étalonnage S_{E}, pourront notamment être tous deux formés par des signaux périodiques, par exemple sinusoïdal, carré, ou triangulaire, d'amplitude sensiblement comprise entre 10 V et 400 V, et par exemple égale à 100 V et de fréquence sensiblement comprise entre 10 Hz et 500 kHz, et par exemple égale à 100 kHz.

Avantageusement, le miroir 1 conforme à l'invention et le procédé correspondant confèrent audit miroir une excellente fiabilité dans la durée, une grande robustesse vis-à-vis des dérives, et une capacité à se corriger automatiquement en fonction des évolutions de ses conditions de fonctionnement, notamment thermiques, électroniques ou électromagnétiques, et ce en toute transparence pour l'utilisateur. En assurant un contrôle et un étalonnage régulier du miroir, le procédé améliore les performances du miroir tout à la fois en précision, en rapidité, et en stabilité, y compris lors de déformations alternées rapides ou de forte amplitude. En outre, il peut avantageusement être mis en œuvre au moyen d'une structure particulièrement simple, compacte, légère, et de préférence modulaire, relativement facile et peu coûteuse à fabriquer et à assembler, et qui permet au miroir d'embarquer, sans surcroît d'encombrement, un organe d'étalonnage commun intégralement contenu dans son boîtier. En outre, il permet de s'affranchir de l'utilisation de gabarits mécaniques ou de dispositifs d'étalonnage externes coûteux et eux-mêmes potetitiellement sources d'erreurs d'étalonnage et donc d'erreurs de mesure,

### POSSIBILITE D'APPLICATION INDUSTRIELLE

L'invention trouve son application industrielle dans la conception, la fabrication et l'utilisation de systèmes à surface mobile et/ou déformable

## Revendications

1. - Système (1) comportant :
- une surface mobile et/ou déformable (2),
- au moins un premier et un second capteur (C1, C2) conçus pour fournir respectivement un premier et un second signal de mesure (S1, S2) relatifs à la forme et/ou à la position de ladite surface mobile et/ou déformable (2)
- et un circuit de traitement (12) pour recueillir lesdits premier et deuxième signaux de mesure (S1, S2),
ledit circuit de traitement étant conçu pour déterminer la forme et/ou la position de ladite surface mobile et/ou déformable (2) à partir desdits signaux de mesure (S1, S2), ledit système (1) comprenant à cet effet au moins une première voie de mesure (V1) permettant de recueillir le premier signal de mesure (S1) et une seconde voie de mesure (V2) permettant de recueillir le second signal de mesure (S2), ledit système (1) étant **caractérisé en ce qu'**il constitue un miroir déformable, ladite surface mobile et/ou déformable (2) formant un organe réflecteur, ledit système comprenant un organe d'étalonnage commun (20) permettant d'injecter simultanément dans la première voie de mesure (V1) et la seconde voie de mesure (V2) un signal d'étalonnage (S_{E}) connu afin de permettre l'étalonnage de tout ou partie du circuit de traitement (12), ledit organe d'étalonnage commun (20) étant conçu pour que les signaux images (S'1, S'2, S'n) restitués par lesdites voies de mesure (V1, V2, Vn) en réponse à l'injection dudit signal d'étalonnage (S_{E}) soient sensiblement indépendants de la forme et de la position de ladite surface mobile (2), l'organe d'étalonnage commun (20) et les voies de mesure (V1, V2, Vn) appartenant à une même structure multicouche (30), du genre plaque de circuit imprimé, le système (1) comportant une pluralité d'actionneurs (6) possédant chacun un équipage mobile (7) fixé à la surface mobile et/ou déformable (2) afin de pouvoir entraîner localement cette dernière en déplacement, la structure multicouche (30) étant percée de passages (32) permettant auxdits équipages mobiles (7) de la traverser.

2. - Système (1) selon la revendication 1 **caractérisé en ce que** ledit circuit de traitement (12) est un circuit d'asservissement pilotant la déformation et/ou le déplacement de ladite surface mobile et/ou déformable (2).

3. - Système (1) selon la revendication 1 ou 2 **caractérisé en ce que** la première et la seconde voie de mesure (V1, V2) sont formées par des pistes conductrices (22), tandis que l'organe d'étalonnage commun (20) est formé par une électrode (23) commune auxdites pistes (22)

4. - Système (1) selon l'une des revendications précédentes **caractérisé en ce que** l'organe d'étalonnage commun (20) est séparé des première et seconde voies de mesure (V1, V2) par une couche diélectrique (24) et coopère avec lesdites voies de mesure par couplage capacitif.

5. - Système (1) selon l'une des revendications précédentes **caractérisé en ce que** la structure multicouche (30) forme un support de référence (14) rigide, par rapport auquel la surface mobile et/ou déformable (2) se déplace lorsqu'elle se déforme, et qui porte les capteurs (C1, C2, Cn).

6. - Système (1) selon l'une des revendications précédentes **caractérisé en ce que** la structure multicouche (30) présente un premier écran de protection (33) et un second écran de protection (34) distant du premier, lesdits écrans (33, 34) étant électriquement conducteurs de sorte à former un blindage électromagnétique délimitant un tunnel (35) dans lequel passent les voies de mesure (V1, V2, Vn).

7. - Système (1) selon la revendication précédente **caractérisé en ce que** l'organe d'étalonnage (20) est formé par une électrode (23) appartenant à la même couche conductrice que celle du premier écran de protection (33) ou du second écran de protection (34), ladite électrode formant une plage périphérique bordant extérieurement l'écran de protection ou une plage intermédiaire sensiblement emboîtée entre deux portions concentriques (33A, 33B, 34A, 34B) dudit écran.

8. - Système (1) selon l'une des revendications précédentes **caractérisé en ce que** l'organe d'étalonnage (20) commun comporte une pluralité de plages conductrices (24) électriquement reliées entre elles et disposées chacune sensiblement à l'aplomb du capteur (C1, C2, Cn) correspondant, à l'opposé de la surface mobile et/ou déformable (2) par rapport audit capteur, ledit système étant en outre **caractérisé en ce qu'**il comprend un réseau de capteurs (C1, C2, Cn) disposés sensiblement à l'aplomb de la surface mobile et/ou déformable (2), **en ce que** les voies de mesure (V1, V2, Vn) se déportent depuis leur capteur respectif vers la périphérie du système (1), et **en ce que** l'organe d'étalonnage (20) est disposé en périphérie dudit système (1).

9. - Système (1) selon l'une des revendications précédentes **caractérisé en ce que** les capteurs (C1, C2) constituent des capteurs de position permettant de relever localement la position variable de la surface mobile et/ou déformable (2) par rapport à un support de référence (14) intégré au système.

10. -Système (1) selon la revendication précédente **caractérisé en ce que** lesdits capteurs (C1, C2) sont capacitifs et comprennent au moins une première armature (15), disposée sur le support de référence (14) en vis-à-vis de la surface mobile et/ou déformable (2), et une seconde armature (16), fixée à ou venue de matière avec ladite surface mobile et/ou déformable (2), et située sensiblement à l'aplomb de la première armature (15).

11. -Système (1) selon l'une des revendications précédentes **caractérisé en ce que** l'organe d'étalonnage (20) commun est associé à des moyens de commutation (25) qui permettent de le raccorder soit à un générateur (21) de signal d'étalonnage, soit à la masse, ledit organe d'étalonnage (20) commun occupant une position invariante par rapport aux première et seconde voies de mesure (V1, V2, Vn).

12. - Procédé d'étalonnage d'un circuit de traitement (12) d'un système (1) selon l'une des revendications précédentes, ledit procédé étant **caractérisé en ce qu'**il comporte une étape (a) d'étalonnage commun qui comprend une sous-étape (a1) d'injection au cours de laquelle on injecte simultanément dans chacune des voies de mesure (V1, V2, Vn) un signal d'étalonnage (S_{E}) prédéfini, puis une sous-étape (a2) de comparaison, au cours de laquelle on compare les signaux images (S'1, S'2, S'n) restitués par lesdites voies de mesure (V1, V2, Vn) en réponse à l'injection dudit signal d'étalonnage (S_{E}) au signal d'étalonnage (S_{E}) qui leur correspond, le système (1) étant conçu pour que les signaux images (S'1, S'2, S'n) restitués par lesdites voies de mesure (V1, V2, Vn) en réponse à l'injection dudit signal d'étalonnage (S_{E}) soient sensiblement indépendants de la forme et de la position de ladite surface mobile (2), puis une sous-étape (a3) de correction au cours de laquelle on modifie une ou plusieurs caractéristiques du circuit de traitement, telles que le gain respectif de chaque voie de mesure (V1, V2, Vn), afin d'obtenir au niveau de chaque voie un signal image fidèle au signal d'étalonnage (S_{E}) qui lui est appliqué.

13. - Procédé d'étalonnage selon la revendication 12 **caractérisé en ce que** l'on injecte sensiblement le même signal d'étalonnage (S_{E}) à l'ensemble des voies de mesure (V1, V2, Vn).

14. - Procédé d'étalonnage selon la revendication 12 ou 13 **caractérisé en ce que** les capteurs sont alimentés par un signal d'excitation (S_{I}) principal de sorte à pouvoir produire en réponse leur signal de mesure (S1, S2, Sn) selon le profil de déformation de la surface mobile et/ou déformable (2), le signal d'étalonnage (S_{E}) étant appliqué aux voies de mesure (V1, V2, Vn) de sorte à se superposer au signal de mesure (S1, S2, Sn).

15. - Procédé d'étalonnage selon l'une des revendications 12 à 14 **caractérisé en ce que** les capteurs sont alimentés par un signal d'excitation (S_{I}) principal de sorte à pouvoir produire en réponse leur signal de mesure (S1, S2, Sn) selon le profil de déformation de la surface mobile et/ou déformable (2), ledit signal d'excitation (S_{I}) étant interrompu lors de l'application aux voies de mesure (V1, V2, Vn) du signal d'étalonnage (S_{E}),

## Patentansprüche

1. System (1) umfassend:
- eine bewegliche und/oder verformbare Oberfläche (2),
- mindestens einen ersten und einen zweiten Sensor (C1, C2), die dazu bestimmt sind, ein erstes bzw. ein zweites Messsignal (S1, S2) zu liefern, das sich auf die Form und/oder die Position der beweglichen und/oder verformbaren Fläche (2) bezieht
- und eine Verarbeitungsschaltung (12) zur Erfassung der ersten und zweiten Messsignale (S1, S2),
wobei die Verarbeitungsschaltung dazu bestimmt ist, die Form und/oder die Position der beweglichen und/oder verformbaren Fläche (2) ausgehend von den Messsignalen (S1, S2) zu bestimmen, wobei das System (1) zu diesem Zweck mindestens einen ersten Messkanal (V1) zum Sammeln des ersten Messsignals (S1) und einen zweiten Messkanal (V2) zum Sammeln des zweiten Messsignals (S2) umfasst, wobei das System (1) **dadurch gekennzeichnet ist, dass** es einen verformbaren Spiegel bildet, wobei die bewegliche und/oder verformbare Oberfläche (2) ein Reflektororgan formt, wobei das System ein gemeinsames Kalibrierungsorgan (20) umfasst, das es ermöglicht, ein bekanntes Kalibrierungssignal (S_{E}) gleichzeitig in den ersten Messkanal (V1) und den zweiten Messkanal (V2) einzuspeisen, um die Kalibrierung der Gesamtheit oder eines Teils der Verarbeitungsschaltung (12) zu ermöglichen, wobei das gemeinsame Kalibrierungsorgan (20) so ausgelegt ist, dass die Bildsignale (S'1, S'2, S'n), die durch die Messkanäle (V1, V2, Vn) als Reaktion auf die Einspeisung des Kalibrierungssignals (S_{E}) zurückgegeben werden, im Wesentlichen unabhängig von der Form und der Position der sich bewegenden Fläche (2) sind, wobei das gemeinsame Kalibrierungsorgan (20) und die Messkanäle (V1, V2, Vn) zu einer selben mehrschichtigen Struktur (30) gehören, vom Typ gedruckte Leiterplatte, wobei das System (1) eine Vielzahl von Betätigungselementen (6) umfasst, die jeweils eine bewegliches Vorrichtung (7) aufweisen, die an der beweglichen und/oder verformbaren Fläche (2) so angebracht ist, dass sie diese lokal verschieben kann, wobei die mehrschichtige Struktur (30) von Durchgängen (32) durchdrungen ist, die den Durchgang der beweglichen Vorrichtungen (7) ermöglichen.

2. System (1) nach Anspruch 1, **dadurch gekennzeichnet, dass** die Verarbeitungsschaltung (12) eine Steuerschaltung ist, die die Verformung und/oder Verschiebung der beweglichen und/oder verformbaren Fläche (2) steuert.

3. System (1) nach Anspruch 1 oder 2, **dadurch gekennzeichnet, dass** der erste und der zweite Messkanal (V1, V2) durch Leiterbahnen (22) gebildet werden, während das gemeinsame Kalibrierungsorgan (20) durch eine den Leiterbahnen (22) gemeinsame Elektrode (23) gebildet ist.

4. System (1) nach einem der vorhergehenden Ansprüche, **dadurch gekennzeichnet, dass** das gemeinsame Kalibrierungsorgan (20) vom ersten und zweiten Messkanal (V1, V2) durch eine dielektrische Schicht (24) getrennt ist und mit diesen Messkanälen durch kapazitive Kopplung kooperiert.

5. System (1) nach einem der vorhergehenden Ansprüche, **dadurch gekennzeichnet, dass** die mehrschichtige Struktur (30) einen starren Referenzträger (14) bildet, relativ zu dem sich die bewegliche und/oder verformbare Fläche (2) bewegt, wenn sie sich verformt, und der die Sensoren (C1, C2, Cn) trägt.

6. System (1) nach einem der vorhergehenden Ansprüche, **dadurch gekennzeichnet, dass** die mehrschichtige Struktur (30) eine erste Schutzabschirmung (33) und eine zweite, von der ersten beabstandete Schutzabschirmung (34) aufweist, wobei die Abschirmungen (33, 34) elektrisch leitend sind, so dass sie eine elektromagnetische Abschirmung bilden, die einen Tunnel (35) begrenzt, in dem die Messkanäle (V1, V2, Vn) verlaufen.

7. System (1) nach dem vorhergehenden Anspruch, **dadurch gekennzeichnet, dass** das Kalibrierungsorgan (20) von einer Elektrode (23) gebildet wird, die zu derselben leitenden Schicht gehört wie die der ersten Schutzabschirmung (33) oder der zweiten Schutzabschirmung (34), wobei die Elektrode eine Randzone bildet, die außen an die Schutzabschirmung angrenzt, oder eine Zwischenzone bildet, die im Wesentlichen zwischen zwei konzentrischen Teilen (33A, 33B, 34A, 34B) der Abschirmung liegt.

8. System (1) nach einem der vorhergehenden Ansprüche, **dadurch gekennzeichnet, dass** das gemeinsame Kalibrierungsorgan (20) eine Vielzahl von leitenden Flächen (24) umfasst, die elektrisch miteinander verbunden sind und jeweils im Wesentlichen senkrecht zu dem entsprechenden Sensor (C1, C2, Cn) gegenüber der beweglichen und/oder verformbaren Fläche (2) in Bezug auf den Sensor angeordnet sind, wobei das System außerdem **dadurch gekennzeichnet ist, dass** es eine Anordnung von Sensoren (C1, C2, Cn) umfasst, die im Wesentlichen senkrecht zu der beweglichen und/oder verformbaren Fläche (2) angeordnet sind, wobei die Messkanäle (V1, V2, Vn) von ihrem jeweiligen Sensor zum Umfang des Systems (1) hin versetzt sind und wobei das Kalibrierungsorgan (20) am Umfang des Systems (1) angeordnet ist.

9. System (1) nach einem der vorhergehenden Ansprüche, **dadurch gekennzeichnet, dass** die Sensoren (C1, C2) Positionssensoren sind, die es ermöglichen, die variable Position der beweglichen und/oder verformbaren Fläche (2) in Bezug auf einen in das System integrierten Referenzträger (14) lokal zu erfassen.

10. System (1) nach dem vorhergehenden Anspruch, **dadurch gekennzeichnet, dass** die genannten Sensoren (C1, C2) kapazitiv sind und mindestens eine erste Armatur (15), die auf dem Referenzträger (14) gegenüber der beweglichen und/oder verformbaren Fläche (2) angeordnet ist, und eine zweite Armatur (16) umfassen, die an der genannten beweglichen und/oder verformbaren Fläche (2) befestigt oder mit ihr einstückig ist und im Wesentlichen lotrecht zur ersten Armatur (15) angeordnet ist.

11. System (1) nach einem der vorhergehenden Ansprüche, **dadurch gekennzeichnet, dass** das gemeinsame Kalibrierungsorgan (20) mit Schaltmitteln (25) verbunden ist, die es ermöglichen, es entweder mit einem Kalibrierungssignalgenerator (21) oder mit Masse zu verbinden, wobei das gemeinsame Kalibrierungsorgan (20) eine in Bezug auf den ersten und den zweiten Messkanal (V1, V2, Vn) unveränderliche Position einnimmt.

12. Verfahren zur Kalibrierung einer Verarbeitungsschaltung (12) eines Systems (1) nach einem der vorhergehenden Ansprüche, wobei das Verfahren **dadurch gekennzeichnet ist, dass** es einen gemeinsamen Kalibrierungsschritt (a) umfasst, der einen Einspeisungs-Unterschritt (a1) umfasst, während dessen ein vordefiniertes Kalibrierungssignal (SE) gleichzeitig in jeden der Messkanäle (V1, V2, Vn) eingespeist wird, dann einen Vergleichsunterschritt (a2) umfasst, bei dem die Bildsignale (S'1, S'2, S'n), die von den Messkanälen (V1, V2, Vn) als Reaktion auf die Einspeisung des Kalibrierungssignals (SE) zurückgegeben werden, mit dem ihnen entsprechenden Kalibrierungssignal (SE) verglichen werden, wobei das System (1) so ausgelegt ist, dass die Bildsignale (S'1, S'2, S'n), die von den Messkanälen (V1, V2, Vn) in Reaktion auf die Einspeisung des Kalibrierungssignals (SE) zurückgegeben werden, im Wesentlichen unabhängig von der Form und der Position der beweglichen Fläche (2) sind, dann einen Korrekturteilschritt (a3) umfasst, bei dem eine oder mehrere Eigenschaften der Verarbeitungsschaltung geändert werden, wie z.B. die jeweilige Verstärkung jedes Messkanals (V1, V2, Vn), um auf dem Pegel jedes Kanals ein Bildsignal zu erhalten, das dem ihm zugeführten Kalibrierungssignal (SE) entspricht.

13. Kalibrierverfahren nach Anspruch 12, **dadurch gekennzeichnet, dass** in alle Messkanäle (V1, V2, Vn) im Wesentlichen das gleiche Kalibriersignal (SE) eingespeist wird.

14. Kalibrierverfahren nach Anspruch 12 oder 13, **dadurch gekennzeichnet, dass** den Sensoren ein Haupterregungssignal (SI) derart zugeführt wird, dass ihr Messsignal (S1, S2, Sn) in Abhängigkeit vom Verformungsprofil der beweglichen und/oder verformbaren Fläche (2) erzeugt werden kann, wobei das Kalibriersignal (SE) derart an die Messpfade (V1, V2, Vn) angelegt wird, dass es dem Messsignal (S1, S2, Sn) überlagert wird.

15. Kalibrierverfahren nach einem der Ansprüche 12 bis 14, **dadurch gekennzeichnet, dass** den Sensoren ein Haupterregungssignal (SI) derart zugeführt wird, dass ihr Messsignal (S1, S2, Sn) in Abhängigkeit vom Verformungsprofil der beweglichen und/oder verformbaren Fläche (2) erzeugt werden kann, wobei das Erregungssignal (SI) unterbrochen wird, wenn das Kalibrierungssignal (SE) an die Messkanäle (V1, V2, Vn) angelegt wird.

## Claims

1. - A system (1) comprising:
- a mobile and/or deformable surface (2),
- at least one first and one second sensor (C1, C2) designed to provide respectively a first and a second measurement signal (S1, S2) relating to the shape and/or to the position of said mobile and/or deformable surface (2)
- and a processing circuit (12) to gather said first and second measurement signal (S1, S2),
said processing circuit (12) being designed to determine the shape and/or the position of said mobile and/or deformable surface (2) on the basis of said measurement signals (S1, S2), said system (1) comprising for this purpose at least one first measurement pathway (V1) making it possible to gather the first measurement signal (S1) and a second measurement pathway (V2) making it possible to gather the second measurement signal (S2), said system (1) being **characterized in that** it constitutes a deformable mirror, said mobile and/or deformable surface (2) forming a reflector member, said system comprising a common calibration member (20) making it possible to inject a known calibration signal (S_{E}) simultaneously into the first measurement pathway (V1) and the second measurement pathway (V2) so as to allow the calibration of all or part of the processing circuit (12), said common calibration member (20) being designed such that the image signals (S'1, S'2, S'n) retrieved by said measurement pathways (V1, V2, Vn) in response to the injection of said calibration signal (S_{E}) are substantially independent of the shape and of the position of said mobile surface (2), the common calibration member (20) and the measurement pathways (V1, V2, Vn) belonging to one and the same multilayer structure (30), of the printed circuit board kind, said system comprising a plurality of actuators (6) each possessing a mobile rig (7) fixed to the mobile and/or deformable surface (2) so as to be able to locally drive the latter in displacement, and **in that** the multilayer structure (30) is drilled with passages (32) allowing said mobile rigs (7) to pass through it.

2. - The system (1) as claimed in claim 1, **characterized in that** said processing circuit (12) is a servocontrol circuit controlling the deformation and/or the displacement of said mobile and/or deformable surface (2).

3. - The system (1) as claimed in claim 1 or 2, **characterized in that**, the first and the second measurement pathway (V1, V2) being formed by conducting tracks (22), the common calibration member (20) is formed by an electrode (23) common to said tracks (22).

4. - The system (1) as claimed in one of the preceding claims, **characterized in that** the common calibration member (20) is separated from the first and second measurement pathways (V1, V2) by a dielectric layer (24) and cooperates with said measurement pathways by capacitive coupling.

5. - The system (1) as claimed in one of the preceding claims, **characterized in that** the multilayer structure (30) forms a rigid reference support (14), with respect to which the mobile and/or deformable surface (2) moves when it deforms, and which carries the sensors (C1, C2, Cn).

6. - The system (1) as claimed in one of the preceding claims, **characterized in that** the multilayer structure (30) exhibits a first protection screen (33) and a second protection screen (34) remote from the first, said screens (33, 34) being electrically conducting so as to form an electromagnetic shielding delimiting a tunnel (35) through which the measurement pathways (V1, V2, Vn) pass.

7. - The system (1) as claimed in the preceding claim, **characterized in that** the calibration member (20) is formed by an electrode (23) belonging to the same conducting layer as that of the first protection screen (33) or of the second protection screen (34), said electrode forming a peripheral span externally bordering the protection screen or an intermediate span substantially nested between two concentric portions (33A, 33B, 34A, 34B) of said screen.

8. - The system (1) as claimed in one of the preceding claims, **characterized in that** the common calibration member (20) comprises a plurality of conducting spans (24) electrically linked together and each disposed substantially plumb with the corresponding sensor (C1, C2, Cn), on the opposite side of the mobile and/or deformable surface (2) with respect to said sensor, said system being further **characterized in that** it comprises a network of sensors (C1, C2, Cn) disposed substantially plumb with the mobile and/or deformable surface (2), **in that** the measurement pathways (V1, V2, Vn) are offset from their respective sensor toward the periphery of the system (1), and **in that** the calibration member (20) is disposed at the periphery of said system (1).

9. - The system (1) as claimed in one of the preceding claims, **characterized in that** the sensors (C1, C2) constitute position sensors making it possible to locally record the variable position of the mobile and/or deformable surface (2) with respect to a reference support (14) integrated into the system.

10. - The system (1) as claimed in the preceding claim, **characterized in that** the sensors (C1, C2) are capacitive and comprise at least one first armature (15), disposed on the reference support (14) opposite the mobile and/or deformable surface (2), and a second armature (16), fixed to or integral with said mobile and/or deformable surface (2), and situated substantially plumb with the first armature (15).

11. - The system (1) as claimed in one of the preceding claims, **characterized in that** the common calibration member (20) is associated with switching means (25) which make it possible to connect it up either to a calibration signal generator (21), or to ground, the common calibration member (20) occupying an invariant position with respect to the first and second measurement pathways (V1, V2, Vn).

12. -A method of calibrating a processing circuit (12) of a system (1) according to any one of the preceding claims, said method being **characterized in that** it comprises a step (a) of common calibration which comprises a sub-step (a1) of injection in the course of which a predefined calibration signal (S_{E}) is injected simultaneously into each of the measurement pathways (V1, V2, Vn), and then a sub-step (a2) of comparison, in the course of which the image signals (S'1, S'2, S'n) retrieved by said measurement pathways (V1, V2, Vn) in response to the injection of said calibration signal (S_{E}) are compared to the calibration signal (S_{E}) which corresponds to them, the system (1) being designed so that the image signals (S'1, S'2, S'n) retrieved by said measurement pathways (V1, V2, Vn) in response to the injection of said calibration signal (S_{E}) are substantially independent of the shape and of the position of said mobile surface (2), and then a sub-step (a3) of correction in the course of which one or more characteristics of the servocontrol circuit, such as the respective gain of each measurement pathway (V1, V2, Vn), is or are modified so as to obtain at the level of each pathway an image signal which is faithful to the calibration signal (S_{E}) which is applied to it.

13. - The calibration method as claimed in claim 12, **characterized in that** substantially the same calibration signal (S_{E}) is injected to the whole set of measurement pathways (V1, V2, Vn).

14. - The calibration method as claimed in claim 12 or 13, **characterized in that** the sensors are fed with a main excitation signal (S_{I}) so as to be able to produce in response their measurement signal (S1, S2, Sn) according to the deformation profile of the mobile and/or deformable surface (2), the calibration signal (S_{E}) being applied to the measurement pathways (V1, V2, Vn) so as to be superimposed on the measurement signal (S1, S2, Sn).

15. - The calibration method as claimed in one of claims 12 to 14, **characterized in that** the sensors are fed with a main excitation signal (S_{I}) so as to be able to produce in response their measurement signal (S1, S2, Sn) according to the deformation profile of the mobile and/or deformable surface (2), said excitation signal (S_{I}) being interrupted during the application to the measurement pathways (V1, V2, Vn) of the calibration signal (S_{E}).
